# EUROPEAN PATENT SPECIFICATION

(11) **EP 4 529 600 B1**
(45) Date of publication and mention of the grant of the patent: **10.12.2025**
(21) Application number: 23729661.1
(22) Date of filing: 22.05.2023
(51) Int. Cl.: F23D 14/24, F23D 14/58, F23D 99/00, F23C 13/00, C01B 3/38

(54) **BURNER FOR A REFORMING REACTOR**
BRENNER FÜR EINEN REFORMIERUNGSREAKTOR
BRÛLEUR POUR UN RÉACTEUR DE REFORMAGE

(30) Priority: 23.05.2022 EP 22174787
(43) Date of publication of application: 02.04.2025
(73) Proprietor: CASALE SA, 6900 Lugano (CH)
(72) Inventor: ZANICHELLI, Luca, 20126 Milano (IT); PANZERI, Nicola, 6932 Breganzona (CH)
(74) Representative: M. Zardi & Co S.A.
(86) International application number: PCT/EP2023/063685
(87) International publication number: WO 2023/227547

(56) References cited:
- EP-A1- 1 680 355
- EP-A1- 2 362 139
- EP-A2- 2 657 611
- CN-A- 105 757 716
- DE-U1- 202010 005 022

## Description

### Field of application

The invention relates to a novel design of a burner for a reforming reactor, particularly for a secondary reformer.

### Prior art

A burner for a reforming reactor is designed to introduce a process gas and an oxidizer into a combustion chamber. The process gas is a combustible gas such as, for example a partially oxidized gas resulting from a previous step of primary reforming. The oxidizer may be air, enriched air or pure oxygen.

In a secondary reformer, for example, the burner is installed vertically on top of a pressure vessel. The vessel contains a catalytic bed for the reforming reaction and a combustion chamber above the catalytic bed, wherein the process gas and the oxidizer come into contact so that combustion takes place and the gas mixture reaches the desired temperature for the catalytic reaction (e.g. around 1000-1200 °C).

The burner is designed to feed the process gas and the oxidizer to the combustion chamber, avoiding a premature contact between the two streams.

EP 1 680 355 for example describes a burner with an oxidizer pipe arranged coaxially within a process gas annular channel, wherein the oxidizer pipe has an enlarged end section (nozzle) with a trumpet-like shape. In the preferred embodiment, the oxidizer pipe includes a swirler so that the oxidizer has a swirling motion when it contacts the process gas around the nozzle.

The recognized advantages of this shape include a good mixing between the oxidizer and the process gas, the formation of a stable diffusion flame at the outlet of the oxidizer pipe, avoidance of back-flame in the gas channel, uniform feed to the catalytic bed.

The diffusion flame is formed just downstream of the edge of the trumped shaped nozzle. The distance between the sharp edge of the nozzle and the flame depends on the speed of the two streams, the speed of mixing and the ignition delay time. Typically, in a burner of a secondary reformer, the distance between the flame and the burner tip is in the order of millimetres.

The lip of the trumpet shaped nozzle reaches the highest temperatures and is subject to a considerable thermal stress. With the typical thermal cycling of this kind of equipment, the thermal stress may result in the formation of radial cracks and reduce the reliability and life of the burner.

DE 20 2010 005022 U1 discloses a nozzle of an oxidizer pipe having a lip with a wave profile wherein the wave profile lies in a plane perpendicular to the axis.

### Summary of the invention

The invention derives from the continuous effort to improve the above-described design of a burner. Particularly, the invention aims at solving the problem of how to mitigate the thermal stress on the lip (circumferential edge) of the nozzle. The applicant has realized, first of all, that the distance between the flame and the lip is the key parameter controlling the lip temperature. Furthermore, the invention is based on the very unexpected finding that a modified shape of the lip is effective in reducing the thermal stress. Particularly, the applicant has found that a deviation of the lip from the conventional planar (circle) configuration to a generic periodic curve leads to a surprisingly significant reduction of the thermal stress.

Accordingly, the above problem is solved with a burner according to claim 1.

Preferred features are stated in the dependent claims. Further aspects of the invention are a reactor for reforming a gas and a process of reforming according to the claims.

### Description of the invention

The lip of the end nozzle of the oxidizer pipe has a wave profile with a sequence of crests and troughs in the axial direction of the burner. Said direction is normally a vertical direction, e.g. when the burner is installed on top of a reforming reactor.

Said wave profile lies in a surface parallel to the axis of the burner. Said surface is preferably a cylindrical surface. A line corresponding to the lip of the nozzle lies in the above-mentioned surface. Accordingly, the axial position of a point of the lip may vary depending on the succession of crests and troughs. In a vertically mounted burner, reference can be made to higher and lower parts of the wave profile, wherein the terms "higher" and "lower" refer to vertical elevation.

In a preferred embodiment, the peak amplitude of the wave profile of the lip is 1 mm to 15 mm, preferably 2 mm to 8 mm. The peak amplitude is measured relative to a plane of reference perpendicular to said axial direction of the burner.

The number of waves of the lip, in a preferred embodiment, may be 4 to 36, preferably 6 to 24. The term waves denotes the waves along the full period, thus including a positive and a negative plane according to a reference plane.

Preferably the number of waves of the lip is 0.016/mm to 0.144/mm, more preferably 0.024/mm to 0.096/mm, relative to the diameter in mm of the oxidizer pipe. For example, by applying the above broader range of 0.016/mm to 0.144/mm and assuming the pipe has a diameter of 200 mm, the number of waves may range between 4 and 28. Typically the diameter of the pipe is 100 mm to 300 mm. Said diameter of the pipe is the inner diameter of the cylindrical portion of pipe.

Similarly, the peak amplitude of the waves may be determined as a function of the diameter of the oxidizer pipe. A preferred embodiment provides that, relative to a plane of reference perpendicular to the axial direction of the burner, the peak amplitude of the wave profile of the lip is 0.004 to 0.06, preferably 0.008 to 0.032 relative to said diameter of the oxidizer pipe.

The wave profile of the lip may be any profile which can be represented mathematically by a periodic function such as any of: a sine function, a polynomial function symmetrically or anti-symmetrically repeated, a symmetric or antisymmetric repetition of a shape, or combinations thereof. If the wave profile is constructed with a polynomial function, said function must be symmetrically or anti-symmetrical repeated to provide periodicity. In a preferred embodiment the lip has a sinusoidal profile, wherein the term sinusoidal denotes a profile which can be represented by the sine function.

A highly preferred embodiment includes a swirler in the oxidizer pipe upstream the nozzle. The swirler is adapted to put the oxidizer stream in rotation around the axis of the oxidizer pipe, which is a vertical axis in the preferred installation. Upon exiting from the oxidizer pipe, the stream opens radially following the widened (trumpet-like) profile of the nozzle.

The oxidizer pipe or at least a part thereof, such as the nozzle, is made preferably with 3D printing, for example with additive manufacturing. The manufacturing with 3D printing has the advantage that it does not create internal stress in the material.

A particularly interesting application concerns the secondary reforming of a partially oxidized gas, previously produced in a primary reforming step. This can be made, for example in the context of reforming a hydrocarbon feedstock for producing a hydrogen-containing gas, such as make-up gas for the synthesis of ammonia. The primary reforming step may be performed in a fired furnace (primary reformer) or, in some embodiments, in a gas-heated reformer (GHR).

Another aspect of the invention is a reactor for reforming a process gas comprising a combustion chamber and a burner installed above the combustion chamber, wherein:
the burner includes an oxidizer pipe arranged coaxially within a process gas annular channel;
the burner is arranged vertically so that said oxidizer pipe and annular channel are vertical;
the oxidizer pipe extends below an end section of the annular channel and into the combustion chamber below;
the oxidizer pipe is a cylindrical pipe with an end section which widens out to a tip larger than the pipe, thus having a trumpet-like shape;
wherein said lip of the end section of the oxidizer pipe has a wave profile with a sequence of crests and troughs in the axial direction.

The embodiments of the burner, as described above, are also applicable to the reactor of the invention.

Preferably, the reactor of the invention is a secondary reformer comprising a catalytic bed below the combustion chamber.

Still another aspect of the invention is a process for reforming a hydrocarbon feedstock to produce a hydrogen-containing gas, such as ammonia make-up gas for example, the process including a step of primary reforming the feedstock in the presence of steam, obtaining a primary reforming effluent, and a step of secondary reforming of said effluent in the presence of an oxidizer, wherein the secondary reforming is performed in a reactor as above described.

Without being bound by theory, the applicant has found that the inventive design is able to keep the flame at a greater distance from the lip of the trumpet-like nozzle. The wave profile, for example sinusoidal profile, can be described with reference to a plane which identifies the "position zero" of a conventional profile. From this plane, the inventive profile may have a peak amplitude of 2*d wherein d is the amplitude of a wave, that is the vertical distance of the highest points of crests and of the lower points of the toughs (or "valleys") from said plane.

The number of waves over the circumference of the lid may also vary according to the embodiments.

The wave profile of the invention shifts the position of the flame away from the lip of the nozzle. The shift is about a few millimetres, which may appear small but it is comparable to the typical distance between the flame and the lip, therefore the effect on the temperature field is significant. Interestingly, it has been found that the wave profile in particular is synergistic with the provision of a swirling motion of the oxidizer stream, for example by means of a swirler installed in the oxidizer pipe.

An additional effect contributing in the reduction of the maximum temperature (and therefore of thermal stress) is the fact that the lowest parts (toughs or valleys) of the wave profile curve are exposed to a region of higher velocity of the oxidizer stream, compared to the highest parts (crests). Accordingly, the lowest parts of the lip, potentially closer to the flame, benefit from enhanced cooling.

Still another advantage is that the wave shape increases the elasticity of the lip, correspondingly reducing the thermally-induced stress.

To summarize, in a quite surprising manner, the wave profile of the invention benefits from the combined positive effects of: the flame is formed at a greater distance from the lip of the nozzle; certain parts of the nozzle receive a better cooling from the oxidizer stream; the elasticity of the lip and its behaviour under stress are improved. A particularly preferred embodiment is the combination with a swirler located in the oxidizer channel, wherein the swirling motion of the oxidizer stream enhances the advantages mentioned above.

### Description of the figures

The invention is now elucidated with the help of the figures where:
Fig. 1 is a schematic section of a secondary reformer equipped with a burner according to the invention.
Fig. 2 illustrates the nozzle of the oxidizer pipe of the burner.
Fig. 3 illustrates further the profile of the nozzle.

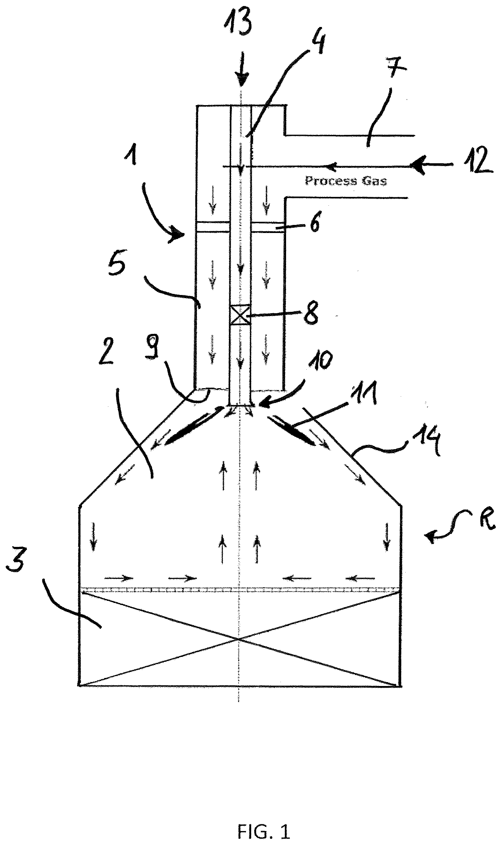

Fig. 1 illustrates the following main features:
- 1: Burner
- 2: Combustion chamber
- 3: Catalyst for secondary reforming
- 4: Oxidizer pipe
- 5: Process gas annular channel
- 6: Gas distributor
- 7: Gas inlet pipe
- 8: Swirler
- 9: End section of the annular channel 5
- 10: Nozzle of the oxidizer pipe 4
- 11: Combustion flame (diffusion flame)
- 12: Process gas stream
- 13: Oxidizer stream
- 14: Wall of the upper portion of the combustion chamber 2.

Fig. 1 illustrates a reactor R fitted with the burner 1. The reactor receives the process gas 12 and the oxidizer 13. With the help of the burner 1, the process gas and the oxidizer 12 are contacted in the combustion chamber 2, so that the combustion brings the gas to a suitable temperature for the subsequent catalytic reaction in the catalyst zone 3.

The process gas 12 may be the effluent of a primary reformer, e.g. a fired furnace. The process gas 12 may result from the steam reforming of a hydrocarbon, such as methane. The oxidizer 13 may be air, enriched air or oxygen provided by an air separation unit.

The process gas 12 and the oxidizer stream 13 reach the combustion chamber 2 via the vertical pipe 4 and the annular channel 5 around said pipe 4. The pipe 4 and channel 5 are separated so that the oxidizer and gas cannot mix within the burner 1 and before they enter the combustion chamber 2.

At the end section 9, the process gas 12 enters the upper zone of the combustion chamber 2. Preferably said upper zone has a conical wall, diverging towards the underlying catalyst bed, as shown.

When exiting the channel 5, the gas 12 may potentially meet the oxidizer 13. The pipe 4 extends below the end section 9 (i.e. within the combustion chamber 2) so that the oxidizer nozzle 10 is actually below the end section 9. Here, a diffusion flame 11 is formed. A recirculation flow is also created, but the location of the nozzle 10 avoids a back-flame in the channel 5.

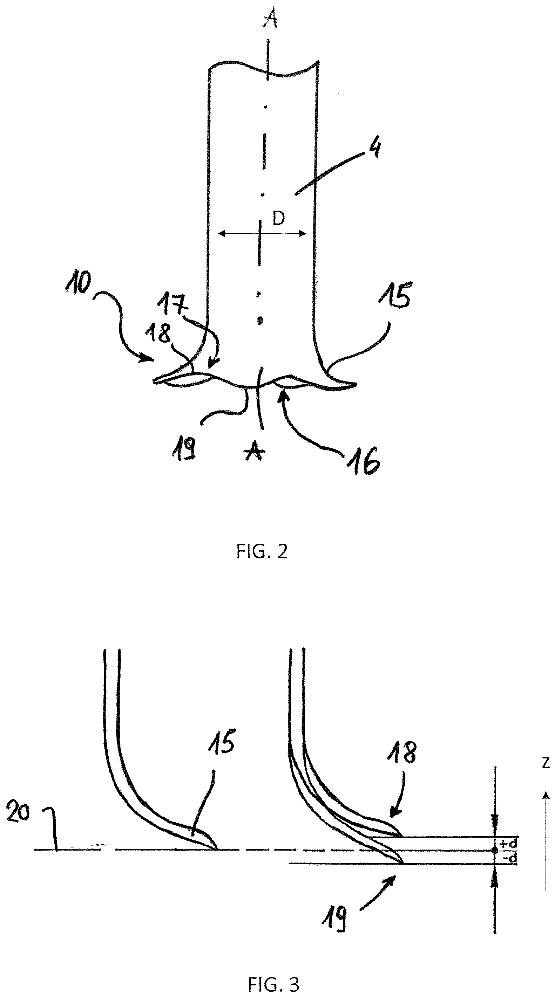

The oxidizer stream exiting the pipe 4 has a swirling motion caused by the swirler 8. The nozzle 10 widens out radially towards the wall 14 thus forming a trumpet-like tip 15 (Fig. 2), from which the swirled flow projects radially to mix with the gas. Accordingly, the outlet end section of the nozzle 10 is larger (i.e. lies on a larger diameter) than the diameter of the pipe 4.

Still referring to Fig. 2, the lip 16 of the pipe 4 has a sinusoidal profile with a number of waves 17, each wave 17 having a crest 18 and a trough 19 in the direction of the axis A-A, which is the vertical direction as the pipe 4 is vertically mounted in the reformer R above the combustion chamber 2.

Fig. 3 illustrates the sinusoidal profile of the lip 16 relative to a reference plane 20. Said plane 20 denotes the position of a planar lip (circumferential lip) according to the prior art. The figure illustrates the deviation of the inventive sinusoidal lip 16 from the conventional planar lip according to the vertical coordinate Z (positive upward). Particularly, Fig. 3 illustrates that the crests 18 are located above the plane 20 at a Z-coordinate +d whereas the troughs 19 are located below the plane 20 at a Z-coordinate -d. The crests 18 may be regarded as "highs" of the lip 16, whereas the troughs 19 are "lows".

Fig. 3 illustrates also the diameter D of the pipe 4, which may be a reference for determining the number and/or amplitude of waves 17 according to some embodiments. Said diameter D is the inner diameter of the cylindrical part of the pipe 4, before the trumpet-like end.

Each wave 17 in the lip 16 may be regarded to include a positive cycle above the reference plane 20 and a negative cycle below said plane.

The crests 18 are slightly more distant from the flame 11 (which is responsible for the thermal stress, mainly by radiation); the toughs 19 are slightly closer to the flame but take the advantage of better cooling due to higher velocity of the flow. In summary, the sinusoidal lip 16 is less stressed than a planar lip under the same conditions.

The figures illustrate that the wave profile of the lip 16 lies in a cylindrical surface parallel to the vertical axis A-A of the burner 1. The wave profile is arranged vertically according to the reference direction Z.

A CFD calculation has revealed a reduction of the maximum temperature of the lip around 10 °C and a maximum thermal stress reduced to about 40% to 70% of the original value.

The figures illustrate a sinusoidal lip 16 but more in general other periodic profiles may be used within the scope of the invention.

## Claims

1. Burner (1) for reforming a process gas, the burner including an oxidizer pipe (4) arranged coaxially within a process gas annular channel (5), according to an axis (A-A) of the burner, wherein said oxidizer pipe extends further relative to an end section (9) of the process gas annular channel, and the oxidizer pipe is a cylindrical pipe with an end nozzle (10) which widens out to form a tip larger than the pipe, thus having a trumpet-like shape;
**characterized in that** said nozzle (10) of the oxidizer pipe (4) has a lip (16) with a wave profile having a periodic sequence of crests and troughs according to said axis.

2. Burner according to claim 1 wherein, relative to a plane of reference perpendicular to said axial direction of the burner, the peak amplitude of the wave profile of the lip is 0.004 to 0.06, preferably 0.008 to 0.032 relative to the diameter of the oxidizer pipe.

3. Burner according to claim 1 or 2 wherein the number of waves of the lip is 0.016/mm to 0.144/mm, preferably 0.024/mm to 0.096/mm, relative to the diameter of the oxidizer pipe.

4. Burner according to any of the previous claims wherein the wave profile of the lip can be represented mathematically by a periodic function such as any of: a sine function; a polynomial function which is symmetrically or anti-symmetrically repeated; a symmetric or antisymmetric repetition of a shape; or combinations thereof.

5. Burner according to claim 1 wherein the lip has a sinusoidal profile.

6. Burner according to claim 5 wherein the sinusoidal profile has an amplitude of 1 mm to 6 mm and a period of 4 to 24 waves.

7. Burner according to any of the previous claims including a swirler (8) located in the oxidizer pipe upstream the nozzle.

8. Burner according to any of the previous claims wherein at least the nozzle of the oxidizer pipe is made with 3D printing, preferably by additive manufacturing.

9. Reactor (R) for reforming a gas feed (12) comprising:
a combustion chamber (2);
a burner (1) according to any of claims 1 to 8;
wherein the burner (1) is installed above the combustion chamber (2) so that the oxidizer pipe (4) and the process gas annular channel (5) are arranged vertically, and said oxidizer pipe (4) extends below an end section (9) of the process gas annular channel, thus extending into the combustion chamber.

10. A reactor according to claim 9, adapted for secondary reforming of a process gas produced after primary reforming with steam of a hydrocarbon feedstock.

11. A process for reforming a hydrocarbon feedstock to produce a hydrogen-containing gas, the process including a step of primary reforming the feedstock in the presence of steam, obtaining a primary reforming effluent, and a step of secondary reforming of said effluent in the presence of an oxidizer, wherein the secondary reforming is performed in a reactor according to claim 9 or 10.

12. A process according to claim 11, wherein a diffusion flame is formed at the tip of the oxidizer pipe where the oxidizer meets the process gas.

13. A process according to claim 11 or 12 wherein the oxidizer is any of air, oxygen-enriched air or oxygen.

## Patentansprüche

1. Ein Brenner (1) zum Reformieren eines Prozessgases, wobei der Brenner ein Oxidationsmittelrohr (4) umfasst, das koaxial innerhalb eines ringförmigen Prozessgaskanals (5) angeordnet ist, entsprechend einer Achse (A-A) des Brenners, wobei sich das Oxidationsmittelrohr relativ zu einem Endabschnitt (9) des ringförmigen Prozessgaskanals weiter erstreckt und das Oxidationsmittelrohr ein zylindrisches Rohr mit einer Enddüse (10) ist, die sich zu einer Spitze erweitert, die größer als das Rohr ist, wodurch es eine trompetenartige Form aufweist;
**dadurch gekennzeichnet, dass** die besagte Düse (10) des Oxidationsmittelrohrs (4) eine Lippe (16) mit einem Wellenprofil aufweist, das eine periodische Abfolge von Wellenbergen und Wellentälern entlang der Achse aufweist.

2. Ein Brenner nach Patentanspruch 1, wobei relativ zu einer Bezugsebene senkrecht zur axialen Richtung des Brenners die Spitzenamplitude des Wellenprofils der Lippe 0,004 bis 0,06, vorzugsweise 0,008 bis 0,032, relativ zum Durchmesser des Oxidationsmittelrohrs beträgt.

3. Ein Brenner nach Patentanspruch 1 oder 2, wobei die Anzahl der Wellen der Lippe 0,0166/mm bis 0,144/mm, vorzugsweise 0,024/mm bis 0,096/mm, relativ zum Durchmesser des Oxidationsmittelrohrs beträgt.

4. Ein Brenner nach einem der vorherigen Patentansprüche, wobei das Wellenprofil der Lippe mathematisch durch eine Periodenfunktion dargestellt werden kann, beliebig gewählt aus:
einer Sinusfunktion; einer symmetrischen oder antisymmetrischen wiederholten Polynomfunktion; einer symmetrischen oder antisymmetrischen Wiederholung einer Form; oder Kombinationen davon.

5. Ein Brenner nach Patentanspruch 1, wobei die Lippe ein sinusförmiges Profil aufweist.

6. Ein Brenner nach Patentanspruch 5, wobei das sinusförmige Profil eine Amplitude von 1 mm bis 6 mm und eine Periode von 4 bis 24 Wellen aufweist.

7. Ein Brenner nach einem der vorherigen Patentansprüche, der einen Wirbler (8) umfasst, der sich in dem Oxidationsmittelrohr stromaufwärts der Düse befindet.

8. Ein Brenner nach einer der vorherigen Patentansprüche, wobei mindestens die Düse des Oxidationsmittelrohrs mittels 3D-Druck, vorzugsweise durch additive Fertigung, hergestellt ist.

9. Ein Reaktor (R) zum Reformieren einer Gaszufuhr (12), umfassend:
eine Brennkammer (2);
einen Brenner (1) nach einem der Patentansprüche 1 bis 8;
wobei der Brenner (1) oberhalb der Brennkammer (2) installiert ist, so dass das Oxidationsmittelrohr (4) und der ringförmige Prozessgaskanal (5) vertikal angeordnet sind und sich das Oxidationsmittelrohr (4) unterhalb eines Endabschnitts (9) des ringförmigen Prozessgaskanals erstreckt und somit in die Brennkammer hineinragt.

10. Ein Reaktor nach Patentanspruch 9, der für die sekundäre Reformierung eines Prozessgases ausgelegt ist, das nach der primären Reformierung mit Dampf eines Kohlenwasserstoff-Einsatzmaterials erzeugt wird.

11. Ein Verfahren zur Reformierung eines Kohlenwasserstoff-Einsatzmaterials zur Erzeugung eines wasserstoffhaltigen Gases, wobei das Verfahren einen Schritt der primären Reformierung des Einsatzmaterials in Gegenwart von Dampf durchgeführt wird, wobei ein primäres Reformierungsabflussprodukt erhalten wird, und einen Schritt der sekundären Reformierung des Abflussprodukts in Gegenwart eines Oxidationsmittels umfasst, wobei die sekundäre Reformierung in einem Reaktor nach Patentanspruch 9 oder 10 durchgeführt wird.

12. Ein Verfahren nach Patentanspruch 11, wobei eine Diffusionsflamme an der Spitze des Oxidationsmittelrohrs gebildet wird, wo das Oxidationsmittel auf das Verfahrensgas trifft.

13. Ein Verfahren nach Patentanspruch 11 oder 12, wobei das Oxidationsmittel Luft, mit Sauerstoff angereicherte Luft oder Sauerstoff ist.

## Revendications

1. Brûleur (1) pour reformer un gaz de traitement, le brûleur incluant un tuyau d'oxydant (4) agencé coaxialement au sein d'un canal annulaire de gaz de traitement (5), selon un axe (A-A) du brûleur, dans lequel ledit tuyau d'oxydant s'étend en outre par rapport à une section d'extrémité (9) du canal annulaire de gaz de traitement, et le tuyau d'oxydant est un tuyau cylindrique avec une buse d'extrémité (10) qui s'élargit pour former une pointe plus grande que le tuyau, ayant ainsi une forme de trompette ;
**caractérisé en ce que** ladite buse (10) du tuyau d'oxydant (4) présente une lèvre (16) avec un profil ondulé présentant une séquence périodique de crêtes et de creux selon ledit axe.

2. Brûleur selon la revendication 1 dans lequel, par rapport à un plan de référence perpendiculaire à ladite direction axiale du brûleur, l'amplitude de crête du profil ondulé de la lèvre est de 0,004 à 0,06, de préférence de 0,008 à 0,032 par rapport au diamètre du tuyau d'oxydant.

3. Brûleur selon la revendication 1 ou 2 dans lequel le nombre d'ondes de la lèvre est de 0,016 /mm à 0,144 /mm, de préférence de 0,024 /mm à 0,096 /mm, par rapport au diamètre du tuyau d'oxydant.

4. Brûleur selon l'une quelconque des revendications précédentes dans lequel le profil ondulé de la lèvre peut être représenté mathématiquement par une fonction périodique telle que l'une quelconque parmi : une fonction sinusoïdale ; une fonction polynomiale qui est répétée symétriquement ou antisymétriquement ; une répétition symétrique ou antisymétrique d'une forme ; ou des combinaisons de celles-ci.

5. Brûleur selon la revendication 1 dans lequel la lèvre présente un profil sinusoïdal.

6. Brûleur selon la revendication 5 dans lequel le profil sinusoïdal présente une amplitude de 1 mm à 6 mm et une période de 4 à 24 ondes.

7. Brûleur selon l'une quelconque des revendications précédentes incluant un swirler (8) situé dans le tuyau d'oxydant en amont de la buse.

8. Brûleur selon l'une quelconque des revendications précédentes dans lequel au moins la buse du tuyau d'oxydant est réalisée par impression 3D, de préférence par fabrication additive.

9. Réacteur (R) pour reformer une alimentation en gaz (12) comportant :
une chambre de combustion (2) ;
un brûleur (1) selon l'une quelconque des revendications 1 à 8 ;
dans lequel le brûleur (1) est installé au-dessus de la chambre de combustion (2) de sorte que le tuyau d'oxydant (4) et le canal annulaire de gaz de traitement (5) soient agencés verticalement, et ledit tuyau d'oxydant (4) s'étend sous une section d'extrémité (9) du canal annulaire de gaz de traitement, s'étendant ainsi dans la chambre de combustion.

10. Réacteur selon la revendication 9, adapté pour le reformage secondaire d'un gaz de traitement produit après le reformage primaire avec de la vapeur d'une matière première hydrocarbonée.

11. Procédé pour reformer une matière première hydrocarbonée pour produire un gaz contenant de l'hydrogène, le procédé incluant une étape de reformage primaire de la matière première en présence de vapeur, pour obtenir d'un effluent de reformage primaire, et une étape de reformage secondaire dudit effluent en présence d'un oxydant, dans lequel le reformage secondaire est effectué dans un réacteur selon la revendication 9 ou 10.

12. Procédé selon la revendication 11, dans lequel une flamme de diffusion est formée à l'extrémité du tuyau d'oxydant où l'oxydant rencontre le gaz de traitement.

13. Procédé selon la revendication 11 ou 12 dans lequel l'oxydant est l'un quelconque parmi de l'air, de l'air enrichi en oxygène ou de l'oxygène.
